# EUROPEAN PATENT APPLICATION

(11) **EP 0 602 828 A1**
(43) Date of publication of application: **22.06.1994**
(21) Application number: 93309584.6
(22) Date of filing: 01.12.1993
(51) Int. Cl.: H04M 1/20, G04B 47/00

(54) **Compact wrist telephone**

(30) Priority: 14.12.1992 US 990477
(71) Applicant: AT&T Corp., New York, NY 10013-2412 (US)
(72) Inventor: Khanna, Satya Pal, Indianapolis, Indiana 46220 (US); Marcus, Larry Allen, Fishers, Indiana 46038 (US)
(74) Representative: Johnston, Kenneth Graham

(57) **Abstract**

A compact telephone, which may be fastened to a user's wrist by means of a strap 310, 320, includes a case 100 having an upper portion 110 that is hinged along one edge to a lower portion 210. A receiver transducer 140 is embedded within the upper portion on the side opposite the hinge, and a microphone transducer 240 is embedded within the lower portion on the side opposite the hinge so that the distance between them is maximized when the case is opened. By providing such separation, inter-transducer distance is increased, and this results in improved signal-to-noise performance. Such performance is further improved by using a directional microphone which is more responsive to sounds coming from the direction of the user's mouth than from other directions.

## Description

### Technical Field

This invention relates to a portable telephone device and, in particular, to a telephone device that is worn on a wrist or as a timepiece.

### Background of the Invention

Advances in microelectronics have made portable telephones a reality. Initially, portability meant that telephones could be installed in an automobile which was linked to a telephone switching office over radio waves. The equipment needed to support such a portable telephone was far too heavy to be conveniently carried by a user, but the desire for greater portability remained unabated. Cordless telephones represented a nearly simultaneous development wherein the user was able to remove the telephone handset from its normal resting place (a telephone base) and then roam around his/her house, during a telephone conversation, without being constrained by a cord that tethered the handset and base together. More recently, Motorola and other companies have introduced very light (less than 8 ounces) personal telephones that can be easily carried in the user's pocket and used for bidirectional telephone conversations over radio waves. Continued advances in microelectronics have finally made it possible to build telephones that are the size of wristwatches.

Perhaps the earliest disclosure of a compact portable telephone was the "two-way wrist radio" shown in the "Dick Tracy" comic strip. Here, a wristwatch functioned as a hands-free telephone (i.e., Dick Tracy spoke directly at the wrist radio during transmission, and listened to a receiver on its face during reception). Unfortunately, details regarding the construction of such a device were not revealed in any of the comic strips. One of the problems associated with this kind of design comes from unwanted acoustic coupling between the receiver and the microphone which leads to oscillation (sometimes called "singing") in extreme cases. This condition places undesirable limits on microphone sensitivity and/or receiver loudness.

One solution to the acoustic coupling problem is found in U.S. Patent 5,121,426 which teaches the use of a directional microphone and the advantageous positioning of a receiver in the null of its directivity pattern. This solution may be augmented by the addition of an acoustic echo canceler. And while this solution is quite effective, it is desirable to further decrease acoustic coupling between the microphone and receiver transducers.

Another solution to the acoustic coupling problem is found in U.S. Patent 4,848,818 which discloses a wristwatch having a pair of straps --each terminating in a clasp. The clasps interconnect with each other to fasten the straps to a user's wrist. A microphone is mounted within one of the clasps and a receiver is mounted within the other, so that when the wristwatch is unstrapped from the user's wrist it may be used as a telephone handset. While this technique advantageously separates the physical distance between the microphone and the receiver to accommodate the distance between the user's mouth and ear, the strap must be relatively stiff so that it can be easily held in place during a telephone conversation which limits the kind of straps that can be used. Furthermore, it is desirable to minimize the number of components installed in the strap because it increases the complexity of the manufacturing process. (Consider the problem of extending wires through the strap to connect the receiver and microphone to the case where the other electronics are located.) Nevertheless, this technique addresses the need for proper modal distance.

The modal distance of a telephone handset is measured from the center of its transmitter port, with the handset held in a prescribed manner, to a mouth reference point. Since it is desirable to deliver a fixed output signal level to the telephone line, changes in modal distance need to be compensated by changes in transmit path gain. However, increasing the amplification in the transmit path also increases any background noise picked up by the transmitter and the resulting signal-to-noise ratio is reduced. And although it may be desirable to avoid using the straps of the above-identified patent to achieve modality, reducing the spacing between the receiver and the microphone will degrade the signal-to-noise ratio and increase the likelihood of feedback from the receiver to the microphone.

Whereas there are a number of known constructions of wristwatch telephones, none are completely satisfactory insofar as modal distance and compactness are concerned. In fact, improving modal distance usually comes at the expense of compactness and/or convenience. It is, therefore, desirable to provide a compact telephone that avoids the cited disadvantages of known wristwatch telephones.

### Summary of the Invention

In accordance with the invention, a compact wrist telephone includes a case having an upper member which is hinged along one of its sides to a corresponding side of a lower member so that it has a closed position and an opened position. A receiver is embedded within one of the members and a microphone is embedded within the other. By such positioning of the microphone and receiver, the distance between them is substantially increased when the case is in the opened position. Accordingly, modality is improved without sacrificing compactness.

In an illustrative embodiment of the invention the distance between the microphone and the receiver, even in the opened position, is less than the distance between the user's mouth and ear; however, a highly directional microphone is used to compensate for non-modality in this situation. The wrist telephone further includes a keypad and a display within the lower member, and a watch bezel is used as the upper member. The bezel comprises a glass area surrounded by a metal or plastic rim which includes a first region for holding the receiver on the side opposite its hinge. Similarly, the lower member includes a second region for holding the microphone on the side opposite its hinge. By locating the microphone and receiver away from the hinge, the distance between these transducers is increased when the case is opened. Furthermore, when the case is closed, the first and second regions overlap each other so that the upper and lower members form a compact structure.

In another illustrative embodiment of the invention, the compact telephone is incorporated into a timepiece that may be carried in the user's pocket or purse, or it may be attached to a necklace and worn around their neck.

### Brief Description of the Drawing

The invention and its mode of operation will be more clearly understood from the following detailed description when read with the appended drawing in which:
FIG. 1 is a perspective view of a case for a compact wrist telephone shown in its opened position;
FIG. 2 discloses the compact wrist telephone of FIG. 1, shown with attached straps and in its closed position;
FIG. 3 discloses a second embodiment of the invention in the form of a pocket watch;
FIG. 4 is a block diagram of circuitry used in the compact telephone;
FIG. 5 discloses a prior art wrist watch telephone; and
FIG. 6 demonstrates the manner in which the compact wrist telephone of the present invention is held during a telephone call.

### Detailed Description

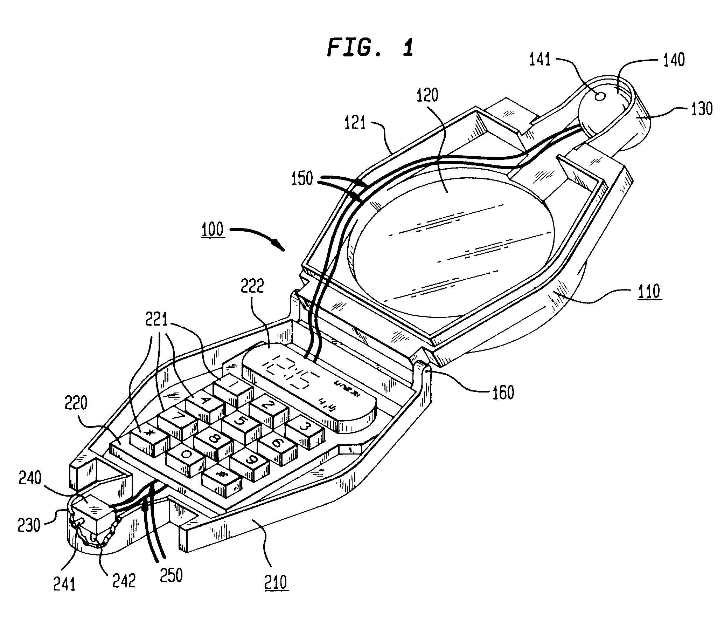

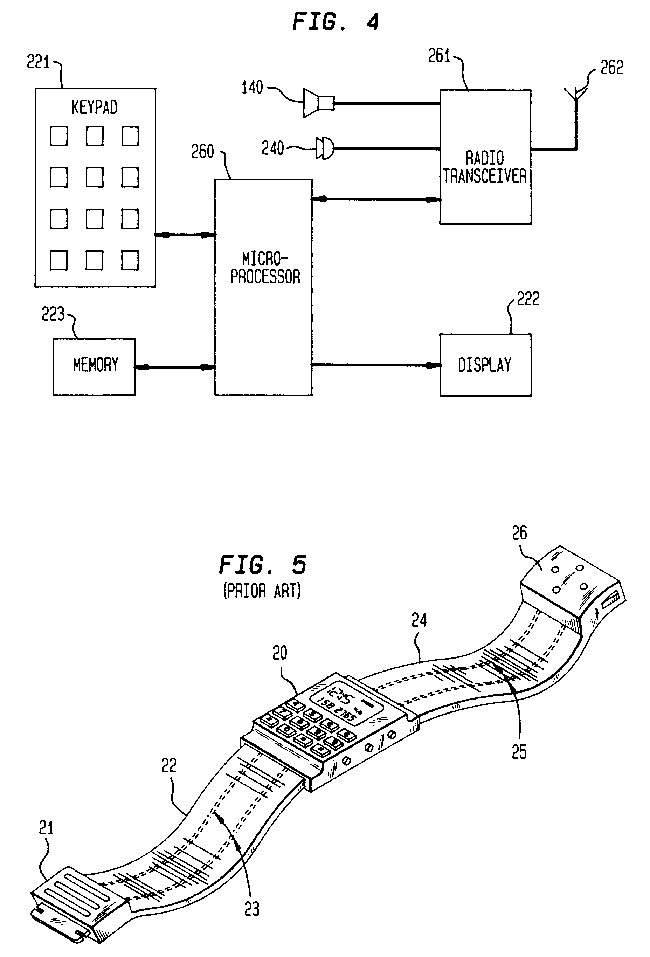

FIG. 1 discloses a case 100 for a compact wrist telephone in accordance with the invention. The case 100 comprises an upper member 110 and a lower member 210 which are hinged together by a hinge 160 along a common side of the case. Various hinging apparatus may be used including a "living hinge" when the upper and lower members are made from plastic material. The lower member 210 includes keypad 221 which is used for dialing a telephone number and for controlling the display 222 which normally shows the time-of-day but also shows the dialed telephone number when used as a telephone. (Because the keys 221 are relatively small, it is desirable to show the dialed number so that errors can be spotted.) Whereas raised keys 221 are illustratively shown in FIG. 1, a preferred embodiment would use membrane-type keys to increase the space available for electronic components needed to operate wrist telephone. Keypad 221 and liquid crystal display 222 are mounted on a circuit board 220. A conventional miniaturized radio transceiver 261, microprocessor 260, and memory 223 (see FIG. 4) are mounted on the bottom side of circuit board 220. Although the battery and antenna are mounted below the circuit board 220, it is the designer's choice whether to incorporate a flexible battery in the strap.

Of particular importance, however, is the location of the microphone and receiver to achieve a significant improvement in modality. Lower member 210 includes a directional microphone that is mounted in enclosure 230 which resides on a side of the lower member that is opposite the side on which hinge 160 is located. Similarly, upper member 110 includes a receiver 140 which is mounted in enclosure 130 which resides on a side of the upper member that is opposite the side on which hinge 160 is located. When the case 100 is opened, the distance between the microphone 240 and receiver 140 is approximately 85 millimeters.

Referring first to the microphone 240, a suitable device is the EL Series Hearing Instrument Electret Microphone which is a directional microphone that is commercially available from Knowles Electronics, Inc. A directional microphone is more responsive to sounds coming from one direction than from another. Contrasted with directional microphones are ones that are equally responsive to sounds coming from *all* directions and called "omnidirectional" or "pressure" microphones. A microphone that is responsive to the phase difference between two spatially separated points of the same sound wave is utilized to achieve directionality. Microphone 240 is such a device, and includes a pair of input ports 241, 242 for receiving sounds at two separated points in space. These input ports are tube-shaped and are oriented in different planes that are perpendicular to each other. Ports 241, 242 protrude through holes in enclosure 230 which supports the microphone 240. Wires 250 connect the microphone to the radio transceiver mounted on the underside of circuit board 220. Alternatively, circuit board paths may be used in place of these wires.

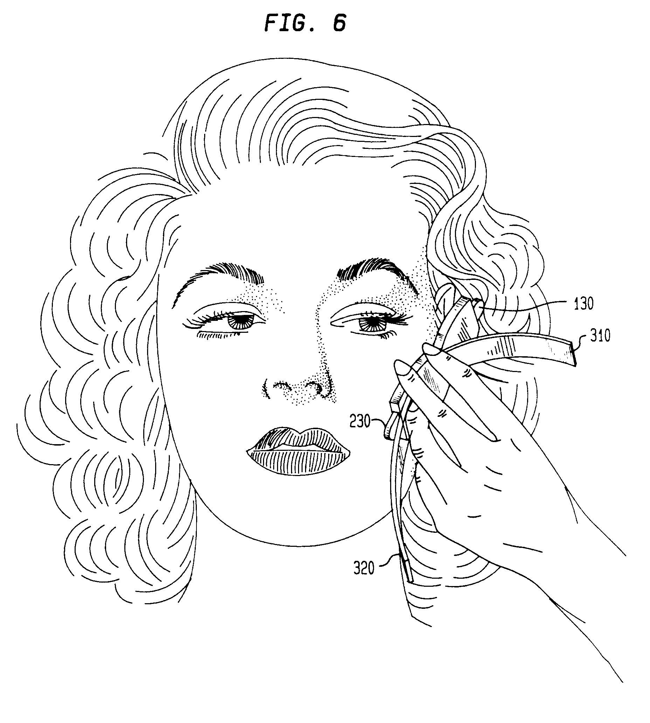

It is well known that the resulting directivity (polar response pattern) of a two-port microphone is a function of the distance between these ports and the manner in which the input sounds are combined (i.e., addition, subtraction, delay). In the preferred embodiment of the invention, a cardioid (i.e., heart-shaped) directivity pattern is used and provided by the aforementioned EL Series microphone. The cardioid pattern is changed when the microphone is mounted on a flat surface (i.e., sound waves are reflected by the flat surface and then combine with the direct sound waves). Accordingly, when the microphone is held nearly flush with the user's cheek (see FIG. 6), both direct and reflected sound waves combine to increase microphone sensitivity because these waves are nearly "in-phase." In optimum situations, microphone sensitivity (hence signal-to-noise ratio) is increased by 6 dB. There is also an approximate 3 dB improvement in directivity which reduces unwanted sound from directions other than the user's mouth. It is noted that the receiver is positioned in the vicinity of the cardioid's null so that sounds emanating from the receiver are not picked up by the microphone.

Upper member 110 is a watch bezel which comprises a glass surface 120 that is supported by rim 121. Enclosure 130 contains receiver 140 whose sounds pass through opening 141 in the enclosure. A suitable receiver is the ED Series Hearing Instrument Receiver which is a high efficiency device that is commercially available from Knowles Electronics, Inc. Wires 150 connect the receiver to the radio transceiver mounted on the underside of circuit board 220.

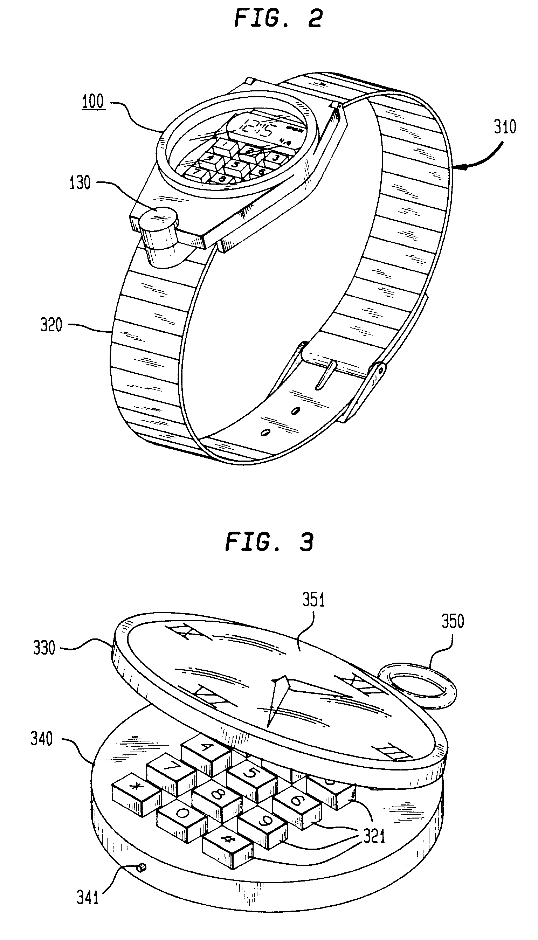

Illustrative embodiments of the subject telephone are shown in FIG. 2 and 3 which respectively disclose a wrist watch and a pocket watch design. FIG. 2 demonstrates the compactness achieved by the invention when case 100 is closed. Enclosure 130 which houses the receiver is designed to overlay the enclosure 240 (see FIG. 1) which houses the microphone. Straps 310, 320 attach to the case and fasten it to the user's wrist.

FIG. 3, on the other hand, discloses a slightly different embodiment of the invention which includes a ring 350 for attachement to a chain or a necklace. Membrane-type keys 321 are shown in this embodiment to provide plenty of room within lower member 340 to house electronic components. Hole 341 in the lower member is used as the primary input port to the microphone located directly behind it. A conventional timepiece 351 is shown independently mounted on upper member 330 which, as in all of the embodiments, is rotatably connected to the lower member. Once again, a hinge is used as the means for accomplishing this connection. Although not shown, a receiver is mounted in the upper housing member 330 in the region directly beneath the Roman Numeral "VI" shown on the timepiece. In this embodiment, inter-transducer distances greater than 85 mm are possible because pocket watches are still deemed aesthetic when they are larger than wrist watches. Further, virtually any watch style can be mounted on the upper housing member 330.

FIG. 4 is a block diagram of conventional electronic circuitry used in wrist watch telephones. Because small batteries are used in such devices, the electronic circuitry is selected to have low power consumption. Display 222 is a liquid crystal device (LCD) that is used to display time-of-day under control of microprocessor 260 which includes permanent "on board" memory that defines its tasks and the order of execution. Variable memory is stored in memory 223 which, illustratively, is a random access memory (RAM) that contains changeable information. An example of changeable information is a speech template which comprises data that is used to recognize a spoken word. Indeed, it would be highly desirable to be able to change the time-of-day or to dial a telephone number by merely speaking an appropriate command into microphone 240 which is interpreted by the microprocessor in conjunction with data stored in memory 223. Keypad 221 comprises a plurality of switch contacts which are sequentially scanned by the microprocessor to determine whether they are presently being pressed. Keypad information is then forwarded from the microprocessor 260 to the radio transceiver 261 which converts same into radio frequency signals, illustratively, in the 900 MHz or 1.6 GHz range. Such frequencies have very short wavelengths and only require short antennas which may easily installed within the watch straps or in the case itself. Audio frequency electrical signals are delivered to the radio transceiver from the microphone 230 and used to modulate a high frequency carrier signal for transmission via antenna 262 to a distant telephone. Similarly, high frequency radio signals are received by antenna 262, demodulated by circuitry within transceiver 261, and converted into audio frequency electrical signals which are delivered to the receiver 140. Such radio transmission apparatus is known in the prior art and further details are omitted for the sake of brevity. FIG. 5 is now discussed as an example of the prior art in wrist watch telephones.

FIG. 5 discloses a prior art wrist telephone device that is normally worn on a user's wrist, but removed for use as a telephone handset. This particular device is described in greater detail in U.S. Patent 4,847,818. Briefly, watch case 20 includes manually operable keys for dialing a telephone number and a display for showing the time of day. The watch case 20 attaches to the user's wrist via straps 22 and 24 which are fastened together by clasps 21 and 26. Clasp 21 encloses a microphone which electrically connects to telephone circuitry within the case 20 by means of conductors 23. Similarly, clasp 26 encloses a receiver which electrically connects to the telephone circuitry within the case by means of conductors 25. For a number of reasons it is desirable to avoid disposing the microphone and receiver on the strap. For example, the manufacturing process would be made easier if it these transducers could be disposed within the watch case 20 itself. Additionally, by placing the microphone and receiver at the ends of the strap, the strap must be stiffened to allow convenient use as a telephone handset. This prior art device offers "modal" separation between the receiver and microphone, which is to say that it matches the distance between the user's ear and mouth. This is a desirable characteristic because it minimizes the demands on microphone sensitivity and receiver power. Additionally, undesirable acoustic coupling between the receiver and microphone is reduced when they are separated. Nevertheless, it is desirable to improve this prior art design by making it more compact while preserving its modality. Heretofore, such opposing requirements have been incompatible with each other.

Finally, FIG. 6 illustrates the convenient manner in which the compact telephone of the present invention is used. In this illustration, the wrist watch of FIG. 1 and 2 is unstrapped from the user's wrist and its case is opened. The upper member 130 of the case contains the receiver which is held close to the user's ear. The lower member 230 of the case contains the microphone which, although somewhat distant from the user's mouth, is designed to be more responsive to sounds coming from the direction of the user's mouth than from other directions. Unlike the prior art of FIG. 5, straps 310, 320 need not be held in any particular position during the conversation. Although it may take some time for users to understand that they don't have to speak directly into the microphone in order to be heard, they will undoubtedly be reassured by the distant party that they are being clearly heard.

## Claims

1. A compact wrist telephone comprising a case 100 having apparatus for transmitting and receiving telephone calls and straps 310, 320 attached to the case for fastening to a user's wrist, the case having an an upper housing member 110 and a lower housing member 210 for enclosing the apparatus therein, the upper housing member being hinged along one side thereof to a corresponding side of the lower housing member so that the case has a closed position and an opened position, said upper member including a receiver 140 mounted therein and said lower member including a microphone 240 mounted therein which is more responsive to sounds coming from a direction opposite the hinged side of the lower member than from the direction of the hinged side; whereby increased distance between microphone and receiver is achieved in a compact wrist telephone.

2. The wrist telephone of claim 1 wherein the microphone 240 has a polar response pattern that is substantially cardioid.

3. The wrist telephone of claim 1 further including timekeeping circuitry and a display 222 for indicating time-of-day.

4. The wrist telephone of claim 3 wherein a watch bezel comprises the upper housing member 110, said watch bezel including a first support structure 130 on the side opposite the hinge for holding the receiver 140.

5. The wrist telephone of claim 4 wherein the lower housing member 210 includes a second support structure 230 on the side opposite the hinge for holding the microphone 240, said first and second structures being similarly shaped so that the upper member substantially covers the lower housing member when the case 100 is closed; whereby separation between receiver and microphone is increased while preserving compactness.

6. An enhanced timepiece comprising timekeeping means and telephone communication means within a common case 100, the enhanced timepiece including means 222 for displaying the time-of-day, means for transmitting and receiving telephone calls at radio frequencies, means 221 for dialing telephone numbers, the case comprising an upper housing member 110 having the receiver 140 mounted therein, a lower housing member 210 having the microphone 240 mounted therein, and means 160 for rotatably attaching an edge of the upper housing member to a corresponding edge of the lower housing member so that the case has a closed position and an opened position, said microphone being more responsive to sounds coming from a direction opposite said attached edges than from the direction of the attached edges.
